# EUROPÄISCHE PATENTANMELDUNG

(11) **EP 1 215 171 A2**
(43) Veröffentlichungstag der Anmeldung: **19.06.2002**
(21) Anmeldenummer: 01125619.5
(22) Anmeldetag: 26.10.2001
(51) Int. Cl.: C01B 33/193, D21H 19/40, B41M 5/00, D06P 1/673, D06M 11/79

(54) **Dotierte Fällungskieselsäure**

(30) Priorität: 14.12.2000 DE 10062449
(71) Anmelder: Degussa AG, 40474 Düsseldorf (DE)
(72) Erfinder: Lindner, Gottlieb-Georg, Dr., 50389 Wesseling (DE); Müller, Astrid, 63776 Mömbris (DE)

(57) **Zusammenfassung**

Die Erfindung betrifft fremdatomdotierte Fällungskieselsäuren mit einer BET-Oberfläche von über 300 m²/g und einer maximalen Oberflächenkonzentration der Fremdatome von 0.05 mMol/m², ein Verfahren zu deren Herstellung und die Verwendung der so erhaltenen Fällungskieselsäuren bei der Papierherstellung.

## Beschreibung

Die Erfindung betrifft Fällungskieselsäuren, die mit zwei, drei oder vierwertigen Metallen dotiert sind, ein Verfahren zu deren Herstellung und die Verwendung dieser dotierten Fällungskieselsäuren.

Kieselsäuren und Aluminiumsilikate, welche durch Fällung mittels Natriumsilikatlösung und Schwefelsäure, Natriumsilikatlösung und anschließender Zugabe eines löslichen Metallsalzes hergestellt wurden, sind bekannt. Bei diesen Herstellprozessen werden auf unterschiedliche Weise Metallionen in Form ihrer Salze oder deren Lösungen zugesetzt, so z.B. Zr, Ti, Zn-Ionen. Diese Ionen können auch chemische Bindungen mit Bestandteilen der Kieselsäure/Silikatoberfläche eingehen und durch einfaches Waschen nicht abgespült werden. Diese Ionen erzeugen kationische Ladungen an der Oberfläche der Kieselsäuren/Silikate und sorgen hierdurch bei der Anwendung in dem Papierstrich von z. B. Inkjet-Papieren für eine Fixierung der meist anionischen Farbstoffe und für brillante Farben im Papierstrich.

Für den Einsatz in der Papierindustrie werden Füllstoffe, die zum Beispiel in Inkjet-Medien die Tinte gut absorbieren und die Brillanz der Farben erhalten, benötigt. Um die Druckgeschwindigkeit erhöhen zu können und die Druckpunktgröße beim Inkjet-Druck verringern zu können, ist eine schnelle Trocknung unabdingbar. Eine Möglichkeit, diesen Anforderungen zu entsprechen, ist das Aufbringen von kieselsäurehaltigen Beschichtungen auf die Medien. Diese Beschichtungen ermöglichen eine rasche Tintenaufnahme, verbessern die Punktschärfe und fördern die definierte kreisförmige Ausbreitung des Tintentropfens. Des weiteren verhindern sie Durchscheinen oder Durchschlagen der Tinte und erzeugen hohe Farbdichten.

Für den Einsatz in der Papierindustrie werden daher extrem leicht dispergierbare Füllstoffe benötigt, die zum Beispiel in Inkjet-Papier oder Inkjet-Folie die Tinte gut absorbieren, und die Brillanz der Farben erhalten.

### Beschreibung der Erfindung

Die Herstellung von dotierten und undotierten Kieselsäuren und Silikaten sind bereits umfangreich beschrieben, so z. B. in EP 0 643 0 15, DE 117 2245 oder DE 124 5006.

Alle dort beschriebenen Fällungen zur Herstellung der Kieselsäure beinhalten drei Verfahrensschritte 1.) Vorlegen von Wasser und optional Natriumsilikatlösung, optional Einstellung von pH, Leitfähigkeit durch Zugabe von Salzen oder deren Lösungen (z.B. Natriumsulfat) ; 2.) Fällphase: hier wird, meist durch Zugabe einer mineralischen Säure wie Schwefelsäure, das Ausfällen der Kieselsäure oder des Silikates bewirkt; 3.) Ansäuerung der Kieselsäure-/Silikatsuspension vor der weiteren Aufarbeitung. Alle drei Phasen sind gekennzeichnet durch ein bestimmtes Temperatur-, Dosier- und pH-Regime, mögliche Unterbrechungs- und/oder Zwischenstufen oder der Zugabe unterschiedliche Salze oder deren Lösungen.

Um an der Oberfläche der Kieselsäuren / Silikate kationische Stellen (Sites) zu erzeugen, werden - mindestens zweiwertige - Metallionen zur ausgefällten Kieselsäure zugegeben (EP 0 493 203). Bei diesen Metallen kann es sich um Erdalkalimetalle, Seltene Erden Metalle, Übergangmetalle (z.B. Ti, Zr, Fe, Ni, Zn) oder Aluminium handeln. Diese Metalle können als Ionen in Form ihrer Salze oder deren Lösungen zugegeben werden. Bei den Salzen kann es sich um organische Salze oder Komplexe handeln, so z.B. Carbonate, Polycarbonate oder auch anorganische Salze wie Halogenide, Oxyhalogenide, Nitrate, Phosphate, Sulfate, Oxydsulfate, Hydroxide, Oxidhydroxide.

Die genannten Ionen entfalten ihre Wirkung vor allem, wenn sie in die Oberfläche der Kieselsäuren bzw. Silikate integriert sind (chemisch gebunden und/oder physikalisch fixiert). Hierfür ist jedoch die Behandlung einer bereits gefällten Kieselsäure oder eines bereits gefällten Silikates (Suspensionen derselben) mit Salzen oder Lösungen der genannten Ionen nicht ausreichend.

EP 0 492 263 offenbart solche Verfahren. Hier werden die Metallsalze zur Dotierung entweder auf bereits hergestellte und resuspendierte Kieselsäure oder auf bereits gefällte aber noch nicht abfiltrierte Kieselsäuresuspensionen aufgetragen. In beiden Fällen werden die Metallionen zwar an der Oberfläche der Partikel abgeschieden, eine chemische Einbindung der Metalle in das Silikatgerüst findet jedoch nicht statt. Auf diese Weise hergestellte dotierte Kieselsäuren bluten leicht aus, bzw. die Metallionen können wieder abgegeben werden.

Aufgabe der vorliegenden Erfindung war daher, mit Metallionen dotierte Kieselsäuren herzustellen, wobei die Metallionen weitgehend in das Silikatgerüst eingebettet werden sollen.

Gegenstand der vorliegenden Erfindung sind daher fremdatomdotierte Fällungskieselsäuren, einer BET-Oberfläche von über 300 m²/g und einer maximalen Oberflächenkonzentration der Fremdatome auf diesen Fällungskieselsäuren von 0.05 mMol/m².

Die zur Dotierung eingesetzten Fremdatome können Al, Zr, Zn, Ti, P, Cr, V, Sc, Ga, In, Fe, Ag, Sc, Mn, Co, Ni, Cu sein.

Die Oberflächenkonzentration dieser Fremdatome, kann zwischen 0,05 mMol/m² und 1•10⁻⁵ mMol/m² (0.01 µmol/m²), bevorzugt zwischen 1•10⁻³ und 1•10⁻⁵ mMol/m² (1 bis 0.01 µMol/m²) besonders bevorzugt bzwischen 1•10⁻³ und 1•10⁻⁴ mMol/m² (1 bis 0.1 µMol/m²) liegen.

Die BET-Oberflächen der erfindungsgemäßen Fällungskieselsäure liegt über 300 m²/g, bevorzugt zwischen 350 bis 800 m²/g, besonders bevorzugt zwischen 350 bis 600 m²/g.

Die Angaben über die Oberflächenkonzentration der Fremdatome wurden der Einfachheit halber aus dem Quotienten des molaren Anteils der Fremdatome und der BET-Oberfläche bestimmt. Diese Angaben stellen einen maximalen Wert der Oberflächenkonzentration unter der Annahme dar, dass die Fremdatome vollständig an der Oberfläche und nicht im Inneren der Partikel konzentriert sind. Diese Annahme ist einerseits nur in Extremfällen erfüllt, stellt aber andererseits sicher, dass dieser Wert auch bei starker Vermahlung des Produkts nicht neu bestimmt werden muss. Bei starker Vermahlung vergrößert sich die Oberfläche der Partikel; wären die Fremdatome tatsächlich nur an der Oberfläche des Primärpartikels konzentriert, so wurde die Oberflächenkonzentration entsprechend absinken und letztendlich von der Partikelgröße abhängen.

Weiterhin ist ein Verfahren zur Herstellung der fremdatomdotierten Fällungskieselsäuren durch Zugabe von Schwefelsäure zu einer wässrigen Natriumsilikatlösung Gegenstand der Erfindung, wobei während der Schwefelsäurezugabe eine Lösung der Fremdatome in Form von anorganischen oder organischen Salzen zugegeben wird.

Gleichzeitig mit der Schwefelsäure und der Fremdatomlösung kann noch weitere Natriumsilikatlösung zugegeben werden.

Die so erhaltenen Fällungskieselsäuren können nach ihrer Herstellung abfiltiert und in Form des in Wasser redispergierten Filterkuchens oder nach Trocknung des Filterkuchens (z. B. in Sprühtrockner, Düsenturmtrockner, Spinflashtrockner, Büttnertrockner oder Drehrohröfen) und Vermahlung (Naß oder Trocken, z. B. in einer wet-jet-mill) weiter verwendet werden.

Die genannten Fremdatome können in Form ihrer organischen oder anorganischen Salze zu unterschiedlichen Zeitpunkten und zu unterschiedlichen Stadien des erfindungsgemäßen Verfahrens, d. h. der Fällung zugegeben werden. Eine Zugabe der Fremdatome, bzw. deren Lösungen in der zweiten Hälfte des Zeitraums der Zugabe der Schwefelsäure oder gegen Ende (15 bis 5 Minuten) der gemeinsamen Zugabe von Natriumsilikatlösung und Schwefelsäure ist bevorzugt. Besonders bevorzugt erfolgt die Zugabe der Fremdatome bzw. der entsprechenden Lösung im letzten Drittel, ganz besonders bevorzugt im letzten Viertel der Zugabe der Schwefelsäure. Hierbei wird ein optimaler Einbau, bzw. eine gute chemisch-physikalische Verbindung der Ionen mit der noch im Wachstum befindlichen Kieselsäure/Silikatoberfläche gewährleistet und selbst durch geringe Mengen der genannten Ionen eine hohe wirksame Konzentration an der Oberfläche der Kieselsäurepartikel garantiert.

Hervorzuheben bei dieser Art der Erzeugung der kationischen Stellen ist, dass sich diese Ionen nur durch Zerstörung der Kieselsäure- / der Silikatstruktur wieder entfernen lassen.

Werden die Fremdatome während der gesamten Fälldauer hinzugegeben, so werden diese auch in die inneren Strukturen der Kieselsäure / des Silikates eingebaut. Hierdurch erhält man bei einer optionalen anschließenden Vermahlung (Trocken- oder Nassvermahlung) der erfindungsgemäßen Kieselsäuren wieder Teilchen, die an ihrer gesamten Oberfläche kationische Stellen (Sites) aufweisen.

Der prozentuale Anteile der genannten Metallionen kann in der Oberflächenregionen der Teilchen jedoch ein Vielfaches der über die Teilchenmasse gemittelten Gewichtsprozente betragen, vor allem, wenn die Zugabe am Ende der Zugabe der Schwefelsäure erfolgt.

Werden im Verlauf der Nassvermahlung Salze oder Lösungen der o.g. Ionen zugesetzt, so entsteht eine innige Verbindung dieser Ionen mit den neu entstehenden Teilchen, vor allem, wenn Submikronteilchen entstehen. Dies kann auf die Zerstörung der Kieselsäure/Silikatstruktur (Agglomerate, Aggregate) zurückgeführt werden, welche zur Entstehung einer überaus aktiven und reaktiven Oberfläche führt. Hier ist dann außer rein physikalischen Bindungen der Ionen an die Kieselsäure / das Silikat auch eine chemische Anbindung möglich. Eine Nassvermahlung bedingt eine exzellente Dispersion und ermöglicht ebenfalls einen hohen Feststoffanteil in den Formulierungen. Die Zugabe von Ionen, d. h. Salzen während einer Trockenvermahlung ist ebenso möglich, führt jedoch nur zu einer physikalischen Mischung.

Das erfindungsgemäße Verfahren kann ausgeübt werden, indem die Fremdatome wie z. B. Al, Zr, Zn, Ti, P, Cr, V, Sc, Ga, In, Fe, Ag, Sc, Mn, Co, Ni, Cu in Form von Chloriden, Nitraten, Carbonaten, Oxiden, Hydroxiden, Oxylchloride, Phosphate, Oxyhydroxide, Oxydsulfate, Polycarbonate und/oder Sulfaten eingesetzt werden.

Die Zugabe der Fremdatome in die Fällungsreaktion der fremdatomdotierten Fällungskieselsäuren kann durch Zugabe einer wässrigen Lösung dieser Salze, entweder über den gleichen Zeitraum, der letzten Hälfte, des letzten Drittels, des letzten Viertels oder des letzten Achtels der Zugabe der Schwefelsäure erfolgen.

Der Zeitpunkt der Zugabe der Salze muß nicht notwendigerweise an den Zeitraum der Zugabe der Schwefelsäure allein gekoppelt sein. Es ist ebenso möglich, bei einer gleichzeitigen Zugabe von Silikat und Säure die Salzzugabe an die o. g. Zugabezeiten bezüglich der Silikatzugabe zu binden. Erfolgt die Silikatzugabe länger als die Säurezugabe, kann der Zeitpunkt der Salzzugabe auch ausschließlich an die Silikatzugabe gekoppelt sein.

Die Zugabe der Fremdionen kann auch in einer Schwefelsäurelösung erfolgen. Zweckmässig werden die Fremdionen in Form ihrer Salze in der Schwefelsäure gelöst, die auch zur Fällung der Kieselsäure verwendet wird.

Die allgemeinen Parameter der Fällungsreaktion wie Temperatur, Rührgeschwindigkeit, Konzentration der vorgelegten Natriumsilikatlösung oder Schwefelsäure, Fälldauer, evtl. Unterbrechung, Verdünnung etc. entsprechen denen bei der Herstellung von undotierten Fällungskieselsäuren und können z. B. in DE 117 22 45, DE 124 50 06 oder EP 97 10 4825.1 nachgelesen werden.

### Verwendung der erfindungsgemäßen, fremdatomdotierten Fällungskieselsäuren

Heutige Tinten, welche vor allem bei allen Arten des sogenannten Inkjet Drucks und dessen verwandten Verfahren benutzt werden, sind meist von anionischer Natur. Daher ist bzgl. der Farbmittelfixierung (Farbstoffe und Pigmente), der Farbbrillanz, der Druckschärfe und -tiefe von großer Bedeutung, dass die zu bedruckenden Medien an ihrer Oberfläche, bzw. in ihren Oberflächenregionen, Teilchen mit einer zumindest teilweisen kationischen Oberfläche aurweisen.

Kieselsäuren und Silikate werden heute bereits vielfach für o.g. Formulierungen eines Striches (z.B. Papier-, Folienstrich) eingesetzt. Eine Modifikation dieser Kieselsäuren und Silikaten derart, dass an ihrer Oberfläche aktive, d.h. zugängliche, kationische Stellen (Sites) entstehen, kommt den heutigen Erfordernissen aufgrund der häufig verwendeten anionischen Farbmittel nach.

Aufgrund des Einflusses der eingebauten Metallionen auf den Brechungsindex können sich weitere Vorteile hinsichtlich der Verwendung in transparenten Medien ergeben, so z. B. bei der Verwendung von Kieselsäuren/Silikaten in Strichen für Folien.

Gegenstand der Erfindung ist daher auch die Verwendung der erfindungsgemäßen fremdatomdotierten Kieselsäuren, bzw. der durch das erfindungsgemäße Verfahren hergestellten Kieselsäuren als Zusatz bei der Papierherstellung.

Insbesondere können erfindungsmäßen Kieselsäuren und Silikate in Papierstrichen von z.B. Inkjet-Papieren und in Strichen für andere bedruckbare Medien, wie z. B. Overheadfolien oder bedruckbare Textilien verwendet werden.

Die erfindungsgemäßen Kieselsäuren und Silikate stellen nicht nur Füllstoffe im herkömmlichen Sinn dar, sondern aufgrund ihrer einzigartigen Eigenschaften, vor allem an ihrer Oberfläche und oberen Schichten, Aktivstoffe für spezielle Anwendung z. B. Fe-dotierte Katalysatoren.

Die erfindungsgemäßen Kieselsäuren können nicht nur als getrocknete und gegebenenfalls vermahlene Produkte eingesetzt werden, sondern auch als Dispersionen. Vorteile in der Weiterverarbeitung bzw. Kostenvorteile liegen vor allem in der Verwendung von dispergierten Filterkuchen der erfindungsgemäßen Fällungskieselsäuren/ bzw.-Silikate.

Die erfindungsgemäßen Fällungskieselsäuren können weiterhin durch die Behandlung mit Silanen wie z. B. in DE 117 22 45 oder DE 107 45 59 beschrieben, ganz oder teilweise hydrophobiert werden.

Es ist für die Verwendung bei der Papierherstellung möglich, den Dispersionen der erfindungsgemäßen Kieselsäuren Hilfsstoffe, die in der Papierindustrie üblich sind, wie z. B. Polyalkohole, Polyvinylalkohol, synthetische oder natürliche Polymere, Pigmente (TiO₂, Fe-Oxide, Al-Metallfilter), aber auch undotierte Kieselsäuren (Fällungskieselsäuren oder Aerosile) beizumischen.

Die folgenden Beispiele sollen die Erfindung näher erläutern, ohne ihren Umfang zu beschränken.

### Beispiele:

In Beispiel 1 wurde die Metallsalzkonzentration in der Mutterlauge mit 56 µg/g eingedampftes Filtrat bestimmt. Der Metallgehalt der Kieselsäure entspricht daher nahezu dem rechnerischen Wert, so dass für die Beispiele 2 bis 4 nur der rechnerische Wert, korrigiert um den prozentualen Verlust im Abwasser gemäß Beispiel 1, angegeben wurde.

### Beispiel 1

In einem 40 l Reaktor, welcher mit Dampf beheizt werden kann, werden 25,353 l Wasser vorgelegt. Zirkonhaltige verdünnte Schwefelsäure wird hergestellt, indem basisches Zirkoncarbonat in 50 Gew.% Schwefelsäure derart aufgelöst wird, so dass 59,9 g basisches Zirkoncarbonat auf 1 l Lösung kommt. Bei einer Temperatur von 37°C werden in 56 Minuten 3,75 l Natriumsilicatlösung (Modul 3,5) zudosiert, wobei der pH-Wert der Suspension durch pH-gesteurte Zugabe der zirkonhaltigen Schwefelsäure während der gesamten Fällzeit auf 5,8 gehalten wird. Hiernach wird der pH-wert der Suspension auf 3 absenkt, filtriert, gewaschen und sprühgetrocknet. Das getrocknete Material wird anschließend auf einer ZPS-Mühle bis zu einem d50-Wert von 8,12 µm vermahlen und anwendungstechnisch in Streichfarben für Inkjet-Papierbeschichtungen getestet.
- Analyse:: BET = 519 m²/g; Trocknungsverlust 7,4 g; gefunden wurden: 1,49 Gew.-% ZrO₂ (M = 123,2 g/mol), 1 g Produkt entspricht somit ca. 0,926 g getrockneter Kieselsäure, wobei 1,49 % 0,0138 g bedeuten = 0,112 µMol,
Die Oberflächenkonzentration des Zr liegt daher bei 2,33•10⁻³ mMol/m²

### Beispiel 2

In einem 401 Reaktor, welcher mit Dampf beheizt werden kann, werden 25,353 1 Wasser vorgelegt. Zirkonhaltige verdünnte Schwefelsäure wird hergestellt, indem basisches Zirkoncarbonat in 50 Gew.% Schwefelsäure derart aufgelöst wird, so dass 20,3 g basisches Zirkoncarbonat auf 1 l Lösung kommt. Bei einer Temperatur von 37°C werden in 56 Minuten 3,75 1 Natriumsilicatlösung (Modul 3,5) zudosiert, wobei der pH-Wert der Suspenion durch pH-gesteuerte Zugabe der zirkonhaltigen Schwefelsäure während der gesamten Fällzeit auf 5,8 gehalten wird. Hiernach wird der pH-Wert der Suspension auf 3 absenkt, filtriert, gewaschen und sprühgetrocknet. Das getrocknete Material wird anschließend auf einer ZPS-Mühle bis zu einem d50-Wert von 6,86 µm vermahlen und anwendungstechnisch in Streichfarben für Inkjet-Papierbeschichtungen getestet.
- Analyse:: Rechnerischer ZrO₂-Gehalt: 0.55 Gew.-%
BET 505 m²/g, Oberflächenkonzentration Zr = 8,89•10⁻⁴ mMol/m².

### Beispiel 3

In einem 40 l Reaktor, welcher mit Dampf beheizt werden kann, werden 25,353 l Wasser vorgelegt. Zirkonhaltige verdünnte Schwefelsäure wird hergestellt, indem basisches Zirkoncarbonat in 50 Gew.% Schwefelsäure derart aufgelöst wird, so dass 98,3 g basisches Zirkoncarbonat auf 1 l Lösung kommt. Bei einer Temperatur von 37°C werden in 56 Minuten 3,75 l Natriumsilicatlösung (Modul 3,5) zudosiert, wobei der pH-Wert der Suspension durch pH-gesteuerte Zugabe der zirkonhaltigen Schwefelsäure während der gesamten Fällzeit auf 5,8 gehalten wird. Hiernach wird der pH-Wert der Suspension auf 3 absenkt, filtriert, gewaschen und sprühgetrocknet. Das getrocknete Material wird anschließend auf einer ZPS-Mühle bis zu einem d50-Wert von 7,77 µm vermahlen und in einem Papier als auch einem Folienstrich getestet.
- Analyse:: Rechnerischer ZrO₂-Gehalt: 2,7 Gew.-%
BET 546 m²/g, Oberflächenkonzentration Zr = 0,4•10⁻⁴ mMol/m².

### Beispiel 4

In einem 40 l Reaktor, welcher mit Dampf beheizt werden kann, werden 25,353 l Wasser vorgelegt. Zirkonhaltige verdünnte Schwefelsäure wird hergestellt, indem basisches Zirkoncarbonat in 50 Gew.% Schwefelsäure derart aufgelöst wird, so dass 162,9 g basisches Zirkoncarbonat auf 1 l Lösung kommt. Bei einer Temperatur von 37°C werden in 56 Minuten 3,75 l Natriumsilicatlösung (Modul 3,5) zudosiert, wobei der pH-Wert der Suspension durch pH-gesteuerte Zugabe der zirkonhaltigen Schwefelsäure während der gesamten Fällzeit auf 5,8 gehalten wird. Hiernach wird der pH-Wert der Suspension auf 3 absenkt, filtriert, gewaschen und sprühgetrocknet. Das getrocknete Material wird anschließend auf einer ZPS-Mühle bis zu einem d50-Wert von 6,14µm vermahlen und in einem Papier als auch einem Folienstrich getestet.
- Analyse:: BET = 502 m²/g; Trocknungsverlust 9,6 g;
Rechnerischer ZrO₂-Gehalt 4,16 Gew.-%,
1 g Produkt entspricht vomit ca. 0,904 g getrockneter Kieselsäure, wobei 4,16 %
0,0376 g bedeuten = 0,305 µMol,
Die Oberflächenkonzentration des Zr liegt daher bei 6,7•10⁻⁴ mMol/m².

Der durch vollständiges Eindampfen des Filtrats rückgewonnene Zirkonanteil beträgt 56 ppm ZrO₂, d. h. das eingesetzte Zirkonsalz wird vollständig in die Fällungskieselsäure eingelagert.

### Verfahrensweise zur Herstellung von Streichfarben

Zur Herstellung der Streichfarben wurde Polyvinylalkohol (PVA) in der Gesamtwassermenge bei ca. 95°C gelöst, dann das Pigment bei 500 bis 1000 Upm eingearbeitet und eine halbe Stunde bei 3000 Upm dispergiert.

Die Streichfarben mit den ZrO₂-dotierten Fällungskieselsäure wurden alle auf 18% Feststoffgehalt eingestellt. Die Rezeptur enthält neben Fällungskieselsäure auch pyrogene Kieselsäure, die noch zusätzlich zur Erhöhung der Farbbrillianz beiträgt.

| **Rezeptur (Papier)** | |
|---|---|
| **Pigment** | 100 Teile |
| **Mowiol 28-99 (PVA)** | 35 Teile (30T) |
| Feststoffgehalt 18% (16%) (20%) | |
| Auftragsgewicht (Ziel) ca. 10 g/m² | |

Die Viskosität nach Brookfield wurde nach Aufrühren gemessen, dann von allen Proben je 5 Blätter von Hand gerakelt. Die Proben wurden kalandriert und ausgewogen, danach den einzelnen Prüfungen unterzogen.

Die Gesamtauswertung erfolgt zum anderen auch per graphischer Darstellung, in der alle Druckergebnisse und die Ergebnisse der Aufsaugtests kumuliert werden:
- Durchschnittsnotender einzelnen Drucktests werden direkt als Werte eingetragen
- Die Werte der Aufsaugzeiten von Schwarz, Cyan, Magenta und Yellow in Sekunden werden addiert und durch 300 geteilt und dann eingetragen
- Die Werte der Längen der abgezogenen Tropfen von Schwarz, Magenta und Yellow in Millimeter werden addiert und dann durch 60 dividiert und eingetragen

So erhält man eine annähernd gleiche Gewichtung der einzelnen Tests bei "schlecht- und bestmöglichen" Testergebnissen der jeweiligen Methoden. Da von der angegebenen Standardrezeptur keine HP 550C-Auswertung nach neuem Drucktest möglich ist, wird diese nachstehend nicht berücksichtigt.

| | | **Beispiel 1** | **Beispiel 2** | **Standardrezeptur 80T Sipernat 310 / 20T MOX 170** |
|---|---|---|---|---|
| | | **Physikalisch-** | **Chemische** | **Daten** |
| Trocknungs-verlust | % | 6,3 | 7,4 | 2,3/<1,5 |
| BET-Oberfläche | m²/g | 505 | 519 | 787/170 |
| DBP-Aufnahme (wasserfrei) | g/100g | 164 | 167 | 254 |
| SR, Brause > 45 µm | % | < 0,1 | 0,02 | - |
| Teilchengröße | | | | |
| Cilas d50 | µm | 6,86 | 8,12 | 5,2 |
| Cilas d5 | µm | 12,9 | 15,4 | 10 |
| Cilas d95 | µm | 2,15 | 2,48 | 2,8 |
| ZrO₂-Gehalt | Gew. % | 0,55 | 1,57 | - |

| **Anwendungstechnisches Verhalten** | | | | |
|---|---|---|---|---|
| **Musterbezeichnung** | | **Beispiel 1** | **Beispiel 2** | **Standardrezeptur** |
| Viskosität, Br.f. (nach 1-2 Tagen) | 5 Upm | 480 | 440 | 10240 |
| | 10 Upm | 470 | 430 | 7040 |
| | 20 Upm | 460 | 435 | 4700 |
| | 50 Upm | 462 | 442 | 2975 |
| | 100 Upm | 462 | 441 | 2190 |
| Strichhaftung Glätte | | Sehr gute Haftung Sehr glatt | Sehr gute Haftung Sehr glatt | Gute-sehr gute Haftung Glatt-mittel |

| **Anwendungstechnische Untersuchung in Inkjetpapier** | | | **Beispiel 1** | **Beispiel 2** | **Standardrezeptur 80T Sipernat 310/ 20T MOX 170** |
|---|---|---|---|---|---|
| **Test A** **Größe der Tropfen/Durchmesser(7,5µl)** | C | mm | 8 | 8 | 10 |
| | M | mm | 8 | 8 | 13 |
| | Y | mm | 8 | 8 | 10 |
| | K | mm | 12** | 13** | 11 |
| **Test B** **Trocknungszeit (1,0 µl)** | C | Sek | 320 | 340 | 520 |
| | M | Sek | 545 | 560 | 340 |
| | Y | Sek | 380 | 360 | 420 |
| | K | Sek | 20 | 17 | 56 |
| **Test C** **Länge des verzogenen Tropfens (1,0 µl)** | C | mm | 19 | 17 | 14 |
| | M | mm | 19 | 20 | 15 |
| | Y | mm | 19 | 16 | 23 |
| | K | mm | 6* | 7* | 7 |
| **Aussehen** | CMY | | 4+ | 4+ | 3 |
| | K | | 5 | 5 | 5 |
| **Farbintensität** | CMY | | I | I | II |
| | K | | III | III | II |
| **Durchschlagen** | CMY | | - | - | - |
| | K | | 0 | 0 | - |

| **Anwendungstechnische Untersuchung in Inkjetpapier** | | **LV 6990 0,55% ZrO**_{**2**} | **LV 6993 1,57% ZrO**_{**2**} | **Standardrezeptur 80T Sipernat 310/ 20T MOX 170** |
|---|---|---|---|---|
| **Auswertung Printtest mittels HP 550C (Vierfarbdruck) ― 300 dpi** | | | | |
| **Farbintensität** | CMY | 2 | 2 | 1 |
| | K | 3 | 3- | 2 |
| **Punktschärfe** | K in CMY | 2 | 2 | 2 , |
| **Übergänge** | CMY/CMY | 1- | 1- | 2 |
| | K/CMY | 2 | 2 | n.d. |
| **Konturen** | | 1 | 1 | n.d. |
| **Schrift** | | 1 | 1 | 1 |
| **Halbton** | | 1- | 1- | 1 |
| **Vis. Bildqualität** | | 2+ | 2- | n.d. |
| Gesamtsumme | | 15,75 | 17,00 | n. d. |
| **Durchschnitt** | | 1,75 | 1,89 | n. d. |

| **Auswertung Printtest mittels Epson Stylus Color 800 (Vierfarbdruck) - 720 dpi** | | | | |
|---|---|---|---|---|
| **Farbintensität** | CMY | 1 | 1 | 1+ |
| | K | 1 | 1 | 3+ |
| **Punktschärfe** | K in CMY | 3 | 2 | 1 |
| **Übergänge** | CMY/CMY | 3- | 2- | 1 |
| | K/CMY | 3- | 2 | 1 |
| **Konturen** | | 4 | 2 | 1 |
| **Schrift** | | 1- | 1 | 1 |
| **Halbton** | | 2 | 2 | 1 |
| **Vis. Bildqualität** | | 2- | 2- | 1- |
| **Gesamtsumme** | | 22,00 | 16,00 | 11,00 |
| **Durchschnitt** | | 2,44 | 1,78 | 1,22 |
| K) Schwarz C) Cyan M) Magenta Y) Yellow | | | | |

| **Beurteilungstabelle und Auswerteschema für Versuche A, B und C:** | | | | | |
|---|---|---|---|---|---|
| **Aussehen der Tropfen und Trockenverhalten** | | **Farbintensität** | | **Durchschlagverhalten** | |
| 1 | Tropfen wird sofort gleichmäßig aufgesaugt, gerade Randabschlüsse | I | kräftige, leuchtend klare Farbtöne | ++ | kein Durchschlagen auf der Papierrückseite |
| 2 | Tropfen wird sofort gleichmäßig aufgesaugt, ausgefranste Randabschlüsse, leichter Löschpapiereffekt | II | kräftige, klare Farbtöne | + | sehr leichtes Durchschlagen auf der Papierrückseite |
| 3 | Tropfen bleibt zunächst perlenartig auf dem Papier stehen, trocknet langsam, gerade Randabschlüsse | III | kräftige, leicht mattiert wirkende Farbtöne | 0 | mittleres Durchschlagen auf der Papierrückseite |
| 4 | Tropfen bleibt zunächst perlenartig auf dem Papier stehen, trocknet langsam, ausgefranste Randabschlüsse, leichter Löschpapiereffekt | IV | matte Farbtöne | - | stärkeres Durchschlagen auf der Papierrückseite, Rückseite noch trocken |
| 5 | Tropfen wird gleichmäßig aufgesaugt, Randabschlüsse stärker ausgefranst, Löschpapiereffekt | V | sehr matte Farbtöne, kaum Farbintensität | -- | vollständiges Durchschlagen auf der Papierrückseite, Rückseite feucht bis durchweicht |
| 6 | Tropfen wird ungleichmäßig aufgesaugt, Randabschlüsse stärker ausgefranst, starker Verlauf der Tinte in alle Ebenen | | | | |
| zudem werden die folgenden Parameter gemessen: | | | | | |
| **A** | • Durchmesser der getrockneten Tropfen in mm | **B** | • Durchmesser der getrockneten Tropfen in mm • Zeit bis zur Trocknung in sec | **C** • | Länge der abgezogenen Tropfen in mm nach 1' Wirkzeit (Vortrocknung) |

Für Test A werden je 7,5 µl von jeder Farbe auf die Probe aufgetragen und nach dem Trocknen beurteilt.
Für Test B werden je 1 µl von jeder Farbe auf die Probe aufgetragen und die Trocknungszeit bestimmt.
Für Test C werden je µl von jeder Farbe auf die Probe aufgetragen und nach einer Minute die überstehende Flüssigkeit mit einem Spatel verzogen und die Länge der abgezogenen Tinte bestimmt.

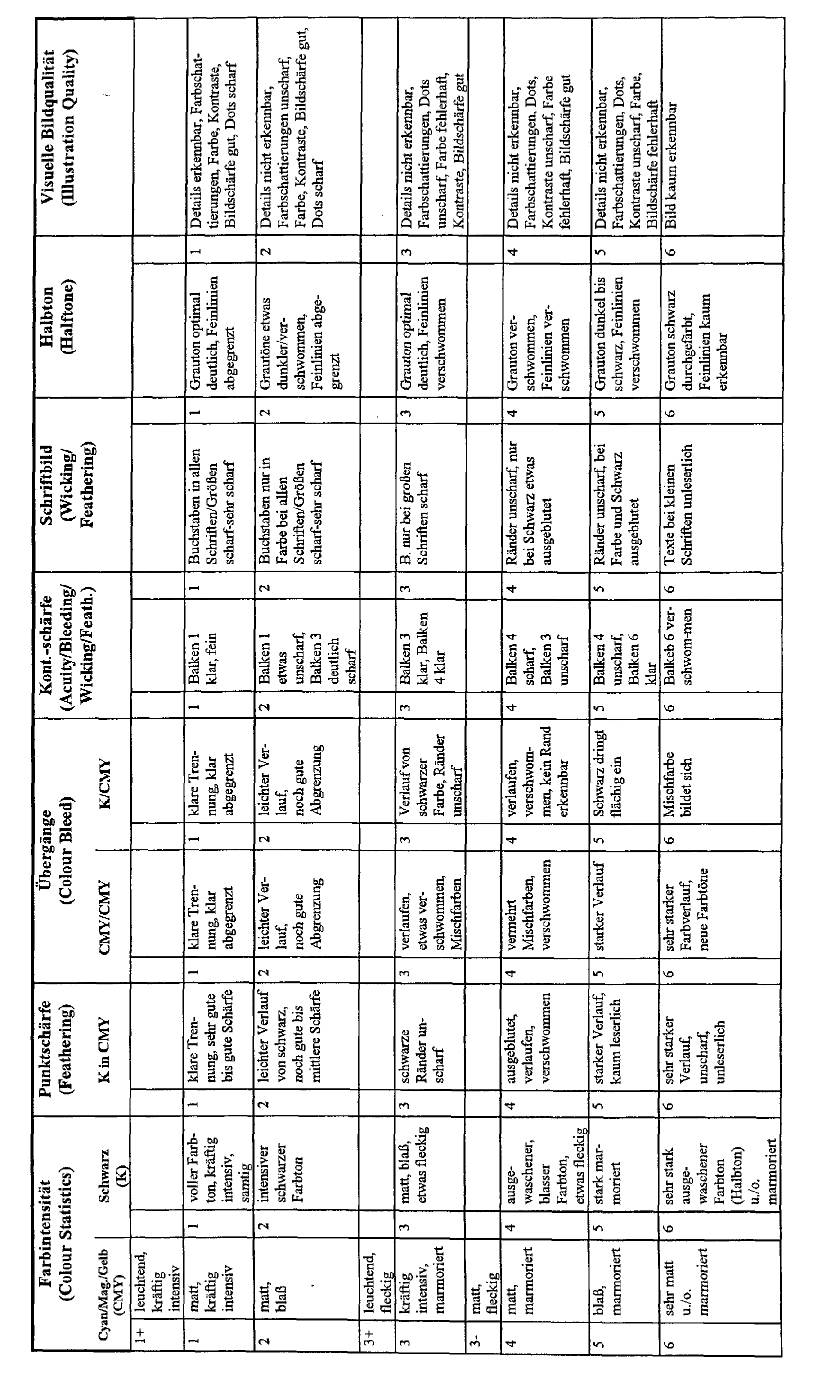

Die Streichfarben wurden nicht wie üblich mit Co-Bindern versetzt. Die Rezepturen wurden nicht weiter auf optimale Eigenschaften optimiert.
Die erfindungsgemäße Verwendung der dotierten Kieselsäuren kann auf andere Rezepturen übertragen werden.

## Patentansprüche

1. Fremdatomdotierte Fällungskieselsäuren mit einer BET-Oberfläche von über 300 m²/g und einer maximalen Oberflächenkonzentration der Fremdatome von 0.05 mMol/m².

2. Fremdatomdotierte Fällungskieselsäuren nach Anspruch 1,
**dadurch gekennzeichnet,**
**dass** die Fremdatome Al, Zr, Zn, Ti, P, Cr, V, Sc, Ga, In, Fe, Ag, Sc, Mn, Co, Ni, Cu sind.

3. Fremdatomdotierte Fällungskieselsäuren nach Anspruch 1 oder 2,
**dadurch gekennzeichnet,**
**dass** die Oberflächenkonzentration der Fremdatome zwischen 1•10⁻⁴ und 1•10⁻³ mMol/m² liegt.

4. Fremdatomdotierte Fällungskieselsäuren nach Anspruch 1 bis 3,
**dadurch gekennzeichnet,**
**dass** die BET-Oberfläche zwischen 350 und 800 m²/g liegt.

5. Verfahren zur Herstellung von fremdatomdotierten Fällungskieselsäuren durch Zugabe von Schwefelsäure zu einer wässrigen Natriumsilikatlösung,
**dadurch gekennzeichnet,**
**dass** während der Schwefelsäurezugabe eine Lösung der Fremdatome in Form von anorganischen oder organischen Salzen zugegeben wird.

6. Verfahren nach Anspruch 5,
**dadurch gekennzeichnet,**
**dass** die Fremdatome in Form ihrer organischen oder anorganischen Salze in der zur Natriumsilikatlösung zuzugegebenen Schwefelsäure gelöst und zugegeben werden.

7. Verfahren nach Anspruch 5 oder 6,
**dadurch gekennzeichnet,**
**dass** die Zugabe der Fremdatome in Form ihrer organischen oder anorganischen Salze über den gleichen Zeitraum wie die Zugabe der Schwefelsäure erfolgt.

8. Verfahren nach Anspruch 5 oder 6,
**dadurch gekennzeichnet,**
**dass** die Zugabe der Fremdatome in Form ihrer organischen oder anorganischen Salze in der zweiten Hälfte des Zeitraums der Zugabe der Schwefelsäure erfolgt.

9. Verfahren nach Anspruch 5 bis 8,
**dadurch gekennzeichnet,**
**dass** als Fremdatome Al, Zr, Zn, Ti, P, Cr, V, Sc, Ga, In, Fe, Ag, Sc, Mn, Co, Ni, Cu in Form von Chloriden, Nitraten, Carbonaten, Oxiden, Hydroxiden, Oxylchloride, Phosphate, Oxyhydroxide, Oxydsulfate, Polycarbonate und/oder Sulfate eingesetzt werden.

10. Verfahren nach einem der Ansprüche 5 bis 8,
**dadurch gekennzeichnet,**
**dass** gleichzeitig mit der Schwefelsäure und der Lösung der Fremdatome eine Natriumsilikatlösung zugegeben wird.

11. Verwendung der fremdatomdotierten Kieselsäuren gemäß einem der Ansprüche 1 bis 4 als Zusatz bei der Papierherstellung.

12. Verwendung der fremdatomdotierten Kieselsäure gemäß einem der Ansprüche 1 bis 4 in bedruckbaren Textilien und bedruckbaren Medien.

13. Verwendung der fremdatomdotierten Kieselsäure gemäß einem der Ansprüche 1 bis 4 in Papierstrichen und Overheadfolien.
